# EUROPEAN PATENT APPLICATION

(11) **EP 4 826 715 A1**
(43) Date of publication of application: **21.10.2026**
(21) Application number: 24926137.1
(22) Date of filing: 29.08.2024
(51) Int. Cl.: G10L 17/24, G06F 40/279, G10L 15/06, G10L 15/08, G06N 3/08

(54) **ELECTRONIC DEVICE AND METHOD FOR SPEECH RECOGNITION**

(30) Priority: 22.02.2024 KR 20240026034
(71) Applicant: Samsung Electronics Co., Ltd., Suwon-si, Gyeonggi-do 16677 (KR)
(72) Inventor: JIN, Sichen, Suwon-si, Gyeonggi-do 16677 (KR); HAN, Changwoo, Suwon-si, Gyeonggi-do 16677 (KR); ROH, Jaeyoung, Suwon-si, Gyeonggi-do 16677 (KR); HAN, Youngho, Suwon-si, Gyeonggi-do 16677 (KR)
(74) Representative: HGF
(86) International application number: PCT/KR2024/012936
(87) International publication number: WO 2025/178189

(57) **Abstract**

Provided are a device and method for voice recognition. The method includes obtaining a text input including a keyword, obtaining a voice signal corresponding to an utterance of a user, obtaining a probability value for the keyword, by using a keyword adaptive detection model, obtaining a threshold value for the keyword by using a threshold determining model, and determining whether the keyword is included in the obtained voice signal based on the probability value and the threshold value.

## Description

### TECHNICAL FIELD

The disclosure relates to a device and method for voice recognition. More particularly, the disclosure relates to a device and method for determining whether a keyword is included in a voice signal.

### BACKGROUND ART

Recently, electronic devices with embedded voice recognition are introduced to improve controllability or operability of various functions of the electronic devices. Voice recognition function has an advantage that a device may be easily controlled through recognition of the voice of a user without a separate operation of buttons or a contact to a touch module.

For example, through such voice recognition function, various electronic devices including, but not limited to, a mobile terminal (such as a smartphone) and home appliances (such as a television, a refrigerator, etc.) may make a call or write a text message without a separate operation of pushing buttons. Accordingly, various functions such as navigating, internet searching, alarm setting, etc. may be set without difficulty.

To enable control by a voice of a user located far away from voice recognition devices, the voice recognition devices are required to guarantee stable performance in a noisy environment. To guarantee stable performance, the wake-on voice (WoV) technology may be used such that a user may let the voice recognition devices know timing of initiation of the voice recognition function. A user may add and utter a predetermined keyword (or wake word) before a main instruction to wake up the voice recognition devices. As the WoV technology serves as a first step of voice recognition, high accuracy is required.

Recently, various technologies for recognition of voice of a user have been studied in the field of voice recognition, and in particular, as a technology for solving issues of power consumption and malfunction according to constant operation of systems for voice recognition service, the WoV technologies to operate the voice recognition service have been studied actively.

The foregoing information is provided only to facilitate understanding of the disclosure, and as such, the disclosure is not limited to the foregoing information should not be considered .

### DISCLOSURE OF INVENTION

### SOLUTION TO PROBLEM

According to an embodiment of the disclosure, a method for voice recognition is provided. The method may include obtaining a text input including a keyword. The method may include obtaining a voice signal corresponding to an utterance of a user. The method may include obtaining a probability value for the keyword, by using a keyword adaptive detection model. The method may include obtaining a threshold value for the keyword by using a threshold determining model. The method may include determining whether the keyword is included in the obtained voice signal based on the probability value and the threshold value.

According to an embodiment of the disclosure, a computer-readable recording medium having recorded thereon a program is provided. The program may include a program for performing any one of the methods described above.

According to an embodiment of the disclosure, an electronic device for voice recognition is provided. The electronic device may include at least one processor including processing circuitry; and memory comprising one or more storage media storing at least one instruction that, when executed by the at least one processor individually or collectively, cause the electronic device to obtain a text input including a keyword. The at least one instruction executed by the at least one processor, individually or collectively, cause the electronic device to obtain a voice signal corresponding to an utterance of a user. The at least one instruction executed by the at least one processor, individually or collectively, cause the electronic device to obtain a probability value for the keyword by using a keyword adaptive detection model. The at least one instruction executed by the at least one processor, individually or collectively, cause the electronic device to obtain a threshold value for the keyword by using a threshold determining model. The at least one instruction executed by the at least one processor, individually or collectively, cause the electronic device to determine whether the keyword is included in the obtained voice signal based on the probability value and the threshold value.

### BRIEF DESCRIPTION OF DRAWINGS

FIG. 1 is a schematic diagram illustrating a method for voice recognition according to an embodiment of the disclosure.
FIG. 2 is a flowchart illustrating a method for voice recognition according to an embodiment of the disclosure.
FIG. 3 is a block diagram of an electronic device configured to determine whether a keyword is included in a voice signal, according to an embodiment of the disclosure.
FIG. 4 is a diagram illustrating a process of training models of an electronic device according to an embodiment of the disclosure.
FIG. 5 is a flowchart illustrating an operation of obtaining a probability value for a keyword, according to an embodiment of the disclosure.
FIG. 6 is a diagram illustrating a process of training at least one model of an electronic device by using user voice data, according to an embodiment of the disclosure.
FIG. 7 is a diagram illustrating a process of determining whether a voice signal is a voice signal obtained by an utterance of a user, according to an embodiment of the disclosure.
FIG. 8A is a diagram illustrating a user interface for enrolling or registering a keyword, according to an embodiment of the disclosure.
FIG. 8B is a diagram illustrating a user interface for enrolling or registering a keyword, according to an embodiment of the disclosure.
FIG. 9A is a diagram illustrating a user interface for enrolling or registering a keyword, according to an embodiment of the disclosure.
FIG. 9B is a diagram illustrating a user interface for enrolling or registering a keyword, according to an embodiment of the disclosure.
FIG. 9C is a diagram illustrating a user interface for enrolling or registering a keyword, according to an embodiment of the disclosure.
FIG. 10 is a diagram of a system in which voice recognition is performed by using an enrolled or registered keyword, according to an embodiment of the disclosure.
FIG. 11 is a block diagram of an electronic device for voice recognition according to an embodiment of the disclosure.
FIG. 12 is a block diagram of an electronic device for voice recognition according to an embodiment of the disclosure.

### MODE FOR THE INVENTION

Hereinafter, the disclosure will be described in detail by explaining embodiments of the disclosure with reference to the accompanying drawings.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure. For example, the sequences of operations described herein are merely examples, and are not limited to those set forth herein, but may be changed as will be apparent after an understanding of the disclosure, with the exception of operations necessarily occurring in a certain order. Also, descriptions of features that are known after an understanding of the disclosure may be omitted for increased clarity and conciseness.

Throughout the disclosure, the expression "at least one of a, b, or c" indicates only a, only b, only c, both a and b, both a and c, both b and c, all of a, b, and c, or variations thereof.

General terms which are currently used widely have been selected for use in consideration of their functions in the disclosure; however, such terms may be changed according to an intention of a person skilled in the art, precedents, advent of new technologies, etc. Furthermore, in certain cases, terms have been arbitrarily selected by the applicant, and in such cases, meanings of the terms will be understood through corresponding descriptions. Accordingly, the terms used in the disclosure should be defined based on their meanings and overall descriptions of the disclosure, not simply by their names.

An expression used in the singular encompasses the expression of the plural, unless it has a clearly different meaning in the context. For example, an expression "constituent surface" may refer to one or more of such surfaces. While such terms as "first," "second," etc., may be used to describe various components, such components must not be limited to the above terms. The above terms are used only to distinguish one component from another.

Throughout the specification, when a portion "includes" a component, another component may be further included, rather than excluding the existence of other components, unless otherwise described. In addition, the terms "... unit," "module," etc., described in the specification refer to a unit for processing at least one function or operation, which can be implemented by a hardware or a software, or a combination of a hardware and a software.

The expression of "configured to" used herein may be replaced with, for example, "suitable for," "having the capacity to," "designed to," "adopted to," "made to," or "capable of" as applicable. Hardware-wise, the expression "configured to" may not necessarily mean "specifically designed to." Instead, in some cases, the expression "a system configured to..." may mean that "a system is capable of... together with other devices and parts. For example, the expression "a processor configured to perform A, B, and C" may mean a dedicated processor for performing A, B, and C (e.g., an embedded processor) or a generic-purpose processor (e.g., a central processing unit or an application processor) capable of performing A, B, and C by executing one or more software programs stored in memory.

In addition, through of the disclosure, when one component is "coupled to" or "connected to" another component, it should be construed as meaning that one component is directly connected to another component or one component is coupled or connected indirectly to another component via an intervening component arranged therebetween unless otherwise described.

In describing the disclosure, technologies which are well known in the art and are not directly related to the disclosure may be omitted. This is to clearly deliver the disclosure without blurring the gist of the disclosure by omitting unnecessary explanation. In the drawings, to clearly describe the disclosure, any portion irrelevant to the description is omitted, and like reference numerals denote like components. The size of each component does not fully reflect an actual size thereof. In the drawings, like reference numerals denote like or corresponding components.

The advantages, features of the disclosure and methods for achieving the same may be clarified by referring to the following detailed embodiments of the disclosure along with the drawings. The disclosure may, however, be embodied in many different forms and should not be construed as being limited to the embodiments of the disclosure set forth herein. Embodiments of the disclosure are provided to complete the disclosure and to fully inform a person skilled in the art about the scope of the disclosure. An embodiment of the disclosure may be defined according to the scope of the claims.

Each block in the flowcharts and combinations of the flowcharts of the disclosure may be performed by computer program instructions. Such computer program instructions may be embedded in a processor of a general-purpose computer, a special purpose computer, or other programmable data processing devices, and the instructions performed by a processor of a computer or other programmable data processing devices may generate a tool to perform functions described in the blocks of flowcharts. These computer program instructions may use a computer or other programmable data processing devices or may be stored in a computer-readable memory to implement functions in a particular manner, and thus, the instructions using a computer or being stored in a computer-readable memory may also be used to manufacture a product including an instruction tool for performing the functions described in the blocks of the flowcharts. The computer program instructions may be embedded in a computer or other programmable data processing equipment. It will be understood that the blocks of each flowchart and combinations of the flowcharts may be performed by one or more computer programs including computer-executable instructions. The one or more computer programs may be stored in a single memory or stored in a plurality of memories which are different from each other.

All functions or operations described in the disclosure may be processed by a single processor or a combination of processors. A single processor or a combination of processors may be a circuitry device configured to perform processing and may include a an application processor (AP), a communication processor (CP), a graphical processing unit (GPU), a neural processing unit (NPU), a microprocessor unit (MPU), a system-on-chip (SoC), an integrated chip (IC), etc.

At least one processor according to an embodiment of the disclosure may include various processing circuitry and/or multi-processors. For example, the term "processor" as used herein and in the scope of claims may include various processing circuitry including one or more one processors, and at least one of the one or more processors may be individually and/or jointly perform various functions described herein in a distributed manner. As used herein, when a "processor," "at least one processor," and "one or more processors" are configured to perform various functions, this may include a case in which one processor performs various functions without any limitation. It may also be possible that processor(s) perform a function other than the functions described herein or that a single processor performs all the functions described herein. Additionally, at least one processor may include a combination of processors configured to perform listed/described various functions in a distributed manner. The at least one processor may execute a program command to achieve or perform various functions.

In addition, each block of the flowcharts of the disclosure may represent a module, a segment, or a part of a code including at least one executable instruction to perform particular logical functions. In an embodiment of the disclosure, the functions mentioned in the blocks may be performed in orders other than an order described herein. For example, two consecutive blocks may be performed substantially simultaneously or may be performed in an opposite order according to their functions.

Such term as "...unit" used in an embodiment of the disclosure may refer to a software or a hardware component such as a field programmable gate array (FPGA) or an application specific integrated circuit (ASIC), and may perform a particular function. However, a unit does not necessarily refer to a software or a hardware. A unit may be included in an addressable storage medium or may be configured to drive at least one processor. In an embodiment of the disclosure,, "...unit" may include components, such as software components, object-oriented software components, class components , and task components, processes, functions, attributes, procedures, sub-routines, segments of program codes, drivers, firmwares, micro-codes, circuitry, data, databases, data structures, tables, arrays, and variables. Functions provided through a particular component or a particular "...unit" may be combined with each other to reduce the number thereof or may be divided to additional components. In addition, in an embodiment of the disclosure, "...unit" may include at least one processor.

Hereinafter, embodiments of the disclosure will be described in detail with reference to the accompanying drawings so that a person with ordinary skill in the art may easily perform the disclosure. However, the disclosure may be implemented in various different forms and is not limited to embodiments of the disclosure described herein. To clearly describe the disclosure, parts that are not associated with the description have been omitted from the drawings, and throughout the specification, like reference numerals refer to like parts. In addition, the reference numerals used in each drawing are used only to describe each drawing and are not intended to distinguish components denoted by different reference numerals in different drawings. The disclosure will now be described more fully with reference to the accompanying drawings.

According to an embodiment of the disclosure, a voice recognition assistance service may include a service of identifying a request included in a voice signal (or audio signal) and processing the identified request. The request may be a request from a user. The voice recognition assistance service may be implemented through an artificial intelligence model. In an embodiment of the disclosure, the voice recognition assistance service may be performed by using an artificial intelligence model which takes a voice signal as an input and infers contents of the voice signal. The voice recognition assistance service may also be referred to as a voice assistance, a virtual assistance, or a voice control system; however, the disclosure is not limited thereto.

According to an embodiment of the disclosure, a keyword may include a syllable or word for initiating or performing a particular function. For example, a keyword may include a word for the voice recognition assistance service. In an embodiment of the disclosure, a keyword may include a predetermine syllable or word and may be arbitrarily determined by a user. A keyword may also be referred to as a wake-up word, a wake word, a wake phrase, a call word, an activation word, or a trigger word; however, the disclosure is not limited thereto.

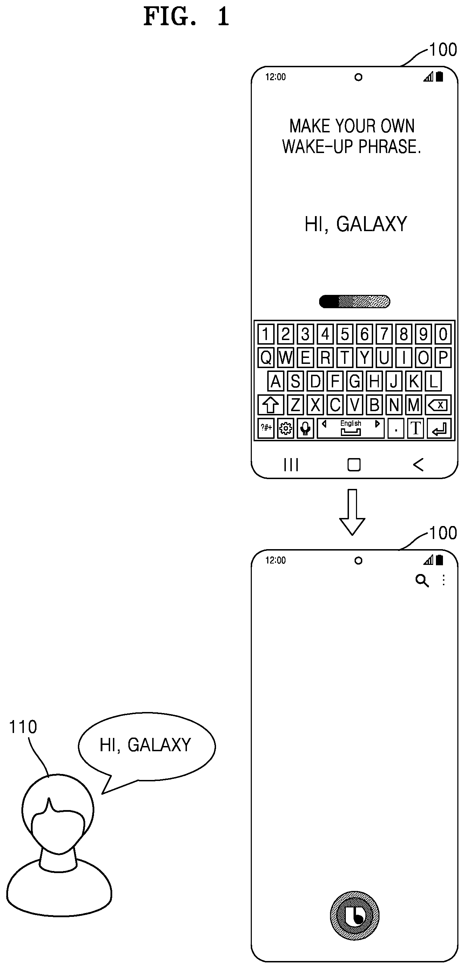

FIG. 1 is a schematic diagram illustrating a method for voice recognition according to an embodiment of the disclosure.

Referring to FIG. 1, an electronic device 100 may recognize voice of a user 110. The electronic device 100 may identify or determine whether a keyword is included in a voice signal corresponding to an utterance of the user 110. The electronic device 100 may initiate or perform a particular function based on a determination that the keyword is included in the voice signal. In an example case in which the keyword is included in the voice signal, the electronic device 100 may perform a voice recognition assistance service. According to an embodiment, the electronic device 100 may recognize content uttered in association with the keyword and perform a particular function based on the content in utterance of the user 110. For example, the electronic device 100 may recognize content included in the utterance of the user 110 input after the keyword is uttered and perform a particular function based on the content in utterance of the user 110. For example, the electronic device 100 may recognize one or more commands included after the keyword in a voice signal corresponding to the utterance of the user 110 and perform a particular function or task based on the one or more commands in utterance of the user 110. However, the disclosure is not limited thereto, and as such, according to an embodiment, the one or more commands may be uttered before the keyword. In an embodiment of the disclosure, the electronic device 100 may provide at least one of an image, a text, or a sound based on a determination that the keyword is included in the obtained voice signal. For example, the electronic device 100 may provide an image or a text through a display or provide a sound through a speaker.

In an embodiment of the disclosure, the electronic device 100 may modify or add a keyword for performing a particular function. In an embodiment of the disclosure, a keyword may include a preset word. For example, unless otherwise set, the electronic device 100 may determine whether a keyword of "Hi, Bixby" is included in a voice signal. According to an embodiment, the electronic device 100 may perform voice recognition by using a keyword input by the user 110. For example, the electronic device 100 may perform voice recognition by using a keyword (e.g., "Hi, Galaxy") input by the user 110 instead of a preset keyword (e.g., "Hi, Bixby"). However, the disclosure is not limited thereto, and as such, according to an embodiment, the electronic device 100 may perform voice recognition by using a preset keyword (e.g., "Hi, Bixby") and/or a keyword (e.g., "Hi, Galaxy") input by the user 110. For example, the electronic device 100 may perform voice recognition by using either a preset keyword (e.g., "Hi, Bixby") or a keyword (e.g., "Hi, Galaxy") input by the user 110.

In an embodiment of the disclosure, the electronic device 100 may obtain a text input regarding a new keyword. The electronic device 100 may enroll a keyword based on the text input. For example, the electronic device 100 may register a keyword without test voice data of the user 110 for a new keyword. According to an embodiment, the electronic device 100 may obtain text voice data by prompting an utterance of the user 110 in regard to the keyword. In this manner, an accuracy of voice recognition may be improved. However, the disclosure is not limited thereto, and as such, the electronic device 100 may omit a process of requiring an utterance of the user 110 in regard to a new keyword and register the new keyword by using only a text input to improve user experience. According to an embodiment, the electronic device 100 may include enrollment or registration of a keyword by obtaining test voice data of a user, and as such, the electronic device 100 may selectively obtain text voice data to improve accuracy of voice recognition.

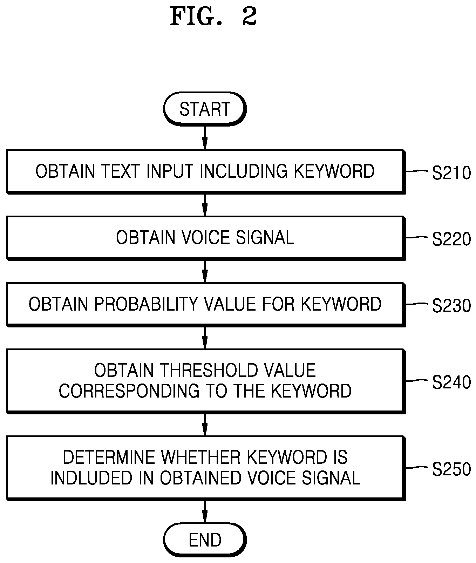

FIG. 2 is a flowchart illustrating a method for voice recognition according to an embodiment of the disclosure.

In an embodiment of the disclosure, a method for voice recognition may be performed by the electronic device 100. For example, in the electronic device 100, a processor of the electronic device 100 may execute at least one instruction included in memory to perform each operation of the method for voice recognition.

In operation S210, the method may include obtaining a text input including a keyword. For example, the electronic device 100 may obtain a text input including a keyword. For example, the electronic device 100 may obtain text-type information including a word or syllable representing a keyword.

In an embodiment of the disclosure, the electronic device 100 may obtain a text input representing a keyword through an input interface. For example, the electronic device 100 may output a text, voice, or image prompting a text input for a keyword on a display in a process of enrolling or registering a new keyword. The electronic device 100 may obtain text-type information representing a new keyword through an input interface (e.g., a touch screen, a touch pad, or a key pad).

In an embodiment of the disclosure, the electronic device 100 may identify a keyword stored in the memory. The electronic device 100 may store the text input representing the keyword and identify the stored keyword stored in the memory.

In operation S220, the method may include obtaining a voice signal. For example, the electronic device 100 may obtain a voice signal corresponding to an utterance of a user. In an embodiment of the disclosure, a voice signal may include a signal obtained from a wavelength generated by an utterance of a user. The voice signal may include an analog signal identified from a wave and/or a digital signal obtained by digitalizing an analog signal.

In an embodiment of the disclosure, the electronic device 100 may obtain a voice signal through the input interface. For example, the electronic device 100 may obtain a voice signal as an analog signal by using a microphone. The electronic device 100 may convert the obtained analog signal into a digital signal. The electronic device 100 may store a voice signal as an analog signal or a digital signal.

In an embodiment of the disclosure, the voice signal obtained by the electronic device 100 may include various sounds including a voice signal corresponding to an utterance of a user. For example, the electronic device 100 may further obtain ambient noise (or voice) that is not from the user, in addition to the voice signal by the utterance of the user. In operation S220, the obtaining, by the electronic device 100, of the voice signal by the utterance of the user may not exclude obtaining of other voice signals.

In an embodiment of the disclosure, the electronic device 100 may obtain a voice signal when a condition is satisfied. For example, the electronic device 100 may obtain a voice signal based on an intensity of a sound obtained through the input interface satisfying a condition. For example, the electronic device 100 may obtain a voice signal when an intensity of a sound obtained through the input interface is greater than or equal to a certain intensity. For example, the electronic device 100 may obtain a voice signal when an intensity of the obtained sound is greater than or equal to 60 dB.

The electronic device 100 may obtain a voice signal when an amount of intensity change of a sound obtained through the input interface is greater than or equal to a certain intensity. For example, the electronic device 100 may obtain a voice signal when an intensity of the obtained sound increases by 20 dB from 50 dB to 70 dB.

In operation S230, the method may include obtaining a probability value for the keyword. For example, the electronic device 100 may determine a probability value regarding whether the keyword is included in the obtained voice signal, by using a keyword adaptive detection model.

In an embodiment of the disclosure, the probability value may include a reliability value or a score which shows whether the keyword is included in the obtained voice signal. For example, the probability value may be a confidence value of the keyword adaptive detection model, which shows whether the keyword is included in the voice signal, and may be represented as a value between 0 and 1. However, the disclosure is not limited thereto, and as such, according to an embodiment, for example, the probability value may be represented as a score showing whether the keyword is included in the voice signal, and the score may be determined without an upper and/or lower limit.

In an embodiment of the disclosure, the keyword adaptive detection model may include an artificial intelligence model trained to take a voice signal as an input and output a probability value. The keyword adaptive detection model may be trained by using a voice training data set. The keyword adaptive detection model may include a large language model (LLM).

In operation S240, the method may include obtaining a threshold value corresponding to the keyword. For example, the electronic device 100 may obtain a threshold value for a keyword by using a threshold determining model.

In an embodiment of the disclosure, a threshold value may include a reference value to be compared with a probability value to determine whether the keyword is included in the voice signal. Different threshold values may be determined according to a keyword. For example, a first keyword may have a first threshold value and a second keyword may have a second threshold value. For example, the first keyword may have the first threshold value based on first syllables of the first keyword and the second keyword may have the second threshold value based on second syllables of the second keyword. For example, different threshold values may be determined when some syllables of the keyword are changed. Similarly, different probability values may be determined according to a keyword.

In an embodiment of the disclosure, the threshold determining model may include an artificial intelligence model trained to take a text input as an input and output a threshold value. The threshold determining model may be trained by using a text training data set corresponding to a voice training data set of the keyword adaptive detection model.

In operation S250, the method may include determining whether the keyword is included in the obtained voice signal. For example, the electronic device 100 may determine whether the keyword is included in the obtained voice signal, based on the probability value and the threshold value.

In an embodiment of the disclosure, the electronic device 100 may compare the probability value and the threshold value. For example, the electronic device 100 may identify whether the probability value is greater than the threshold value. However, the disclosure is not limited thereto, and as such, according to an embodiment, the electronic device 100 may identify a difference (or ratio) between the probability value and the threshold value. For example, the electronic device 100 may identify whether the difference (or the ration) between the probability value and the threshold value satisfies a criteria.

The electronic device 100 may determine whether the keyword is included in the obtained voice signal, based on a result of comparison between the probability value and the threshold value. The electronic device 100 may determine whether the keyword is included in the voice signal when the probability value is greater than the threshold value. The electronic device 100 may determine whether the keyword is included in the voice signal when the difference (or ratio) between the probability value and the threshold value is greater than a certain value.

Operations S210 to S250 illustrated in FIG. 2 describe an example of a method for voice recognition. The electronic device 100 may omit at least some of operations S210 to S250 or may further include an additional operation.

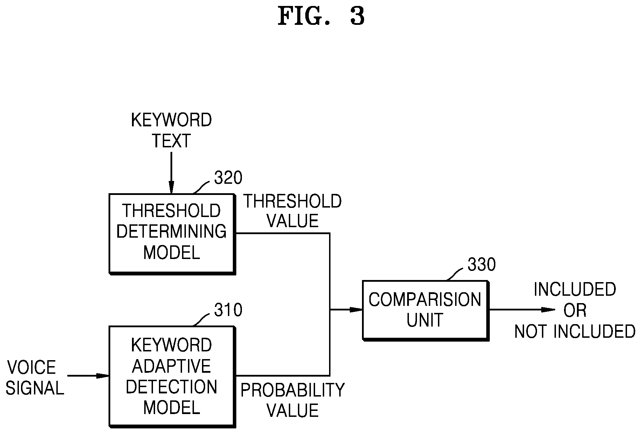

FIG. 3 is a block diagram of an electronic device configured to determine whether the keyword is included in the voice signal, according to an embodiment of the disclosure.

Referring to FIG. 3, the electronic device 100 may include a keyword adaptive detection model 310, a threshold determining model 320, and a comparison unit 330.

The keyword adaptive detection model 310 may obtain a voice signal. According to an embodiment, the voice signal may include a voice signal obtained through the input interface of the electronic device 100. However, the disclosure is not limited thereto, and as such, according to an embodiment, the voice signal may include a voice signal stored in the memory of the electronic device 100.

The voice signal may include a voice signal by an utterance of a user. However, the disclosure is not limited thereto, and the voice signal may include ambient sounds. The voice signal may include ambient sound or noise which is not generated by an utterance of the user.

The voice signal may include consecutive audio streams. For example, the voice signal may include a voice signal for a sound obtained in real time through the input interface. In an embodiment of the disclosure, consecutive voice signals may be divided into a plurality of units to be processed.

The voice signal may be obtained inconsecutively. For example, the voice signal may be obtained based on a particular condition being satisfied. For example, the voice signal may be obtained when an intensity of ambient sounds is greater than a certain intensity.

The keyword adaptive detection model 310 may take the voice signal as an input and determine a probability value showing whether the keyword is included in the voice signal. For example, different probability values may be determined according to training data of the keyword adaptive detection model 310. For example, the probability value may be greater in a case in which the keyword adaptive detection model 310 includes the keyword or more words similar to the keyword.

The keyword adaptive detection model 310 may recognize contents included in the voice signal. In an embodiment of the disclosure, the keyword adaptive detection model 310 may extract features from an input voice signal. For example, the keyword adaptive detection model 310 may determine a feature vector for the voice signal. The keyword adaptive detection model 310 may recognize the contents included in the voice signal based on the features. For example, the keyword adaptive detection model 310 may recognize a syllable, word, or sentence which corresponds to the feature vector. The keyword adaptive detection model 310 may recognize the contents included in the voice signal based on stored feature vector data. However, the disclosure is not limited thereto, and as such, according to an embodiment, the keyword adaptive detection model 310 may recognize the contents included in the voice signal based on an acoustic model trained by using a plurality of feature vectors. In an embodiment of the disclosure, the keyword adaptive detection model 310 may recognize the contents included in the voice signal by using a language model. For example, the language model may determine a probability for contents inferred from the acoustic model. When the probability for the contents inferred from the acoustic model is low, the language model may modify some of the contents.

The keyword adaptive detection model 310 may be trained along with the threshold determining model 320, and a probability value determined by the keyword adaptive detection model 310 may be in correlation to a threshold value determined by the threshold determining model 320.

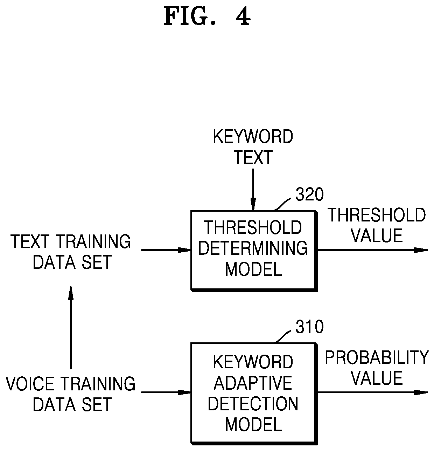

In an embodiment of the disclosure, the keyword adaptive detection model 310 may include the artificial intelligence model trained to take a voice signal as an input and output a probability value. A process of training the keyword adaptive detection model 310 according to an embodiment of the disclosure is described in relation to FIG. 4.

The threshold determining model 320 may obtain a keyword text. The threshold determining model 320 may obtain a text input representing a keyword. The threshold determining model 320 may obtain the text input from the input interface of the memory. The memory may store a keyword preset by a user. The keyword may include a keyword preset by a user, instead of a keyword preset by a manufacturer of the electronic device 100. For example, the manufacturer of the electronic device 100 may set "Hi, Bixby" as an initial keyword, and the user may set "Hi, Galaxy" as a keyword.

In an embodiment of the disclosure, the threshold determining model 320 may determine a threshold value for the keyword. The threshold value may include a reference value to be compared with a probability value to determine whether the keyword is included in the voice signal.

In an embodiment of the disclosure, the threshold determining model 320 may include the artificial intelligence model trained to take a text input as an input and output a threshold value. A process of training the threshold determining model 320 according to an embodiment of the disclosure is described in relation to FIG. 4.

In an embodiment of the disclosure, when a voice signal of a user uttering the keyword is stored, the electronic device 100 may compare the obtained voice signal and the stored user voice signal to determine whether the keyword is included in the voice signal. The electronic device 100 may not store a voice signal of a user uttering the keyword. For example, when enrolling or registering a new keyword, the electronic device 100 may not obtain test voice data of a user uttering the keyword. When the use voice signal for the keyword is not stored, the electronic device 100 may determine whether the keyword is included in the input voice signal based on the text input for the keyword. The electronic device 100 may determine whether the keyword is included in the input voice signal by using the probability value of the keyword adaptive detection model 310 and the threshold value of the threshold determining model 320.

The comparison unit 330 may obtain a probability value and a threshold value. The comparison unit 330 may determine whether the keyword is included in the obtained voice signal, based on the probability value and the threshold value. The comparison unit 330 may compare the probability value and the threshold value. The comparison unit 330 may determine whether the keyword is included in the obtained voice signal, based on a comparison result.

In an embodiment of the disclosure, the comparison unit 330 may determine whether the probability value is greater than or equal to the threshold value. When the probability value is greater than or equal to the threshold value, the comparison unit 330 may determine that the keyword is included in the voice signal. When the probability value is greater than or equal to the threshold value, it may be understood that the keyword is included in the voice signal.

The electronic device 100 may determine whether to perform a particular function based on the probability value and the threshold value. Based on the determination that the keyword is included in the voice signal, which is made by the comparison unit 330, the electronic device 100 may perform a predetermined function. When the comparison unit 330 determines that the keyword is included in the voice signal, the electronic device 100 may determine (or accept) to perform a predetermined function. In addition, when the comparison unit 330 determines that the keyword is not included in the voice signal, the electronic device 100 may determine not to perform (or reject to perform) a predetermined function. When the keyword is included in the voice signal, the electronic device 100 may perform a voice recognition assistance service. Functions performed by the electronic device 100 may be set differently according to a keyword.

Although FIG. 3 illustrates three models, which are the keyword adaptive detection model 310, the threshold determining model 320, and the comparison unit 330, the disclosure is not limited thereto, and at least some of the keyword adaptive detection model 310, the threshold determining model 320, and the comparison unit 330 may be merged into one model or may be subdivided.

FIG. 4 is a diagram illustrating a process of training models of an electronic device according to an embodiment of the disclosure.

Referring to FIG. 4, the keyword adaptive detection model 310 and the threshold determining model 320 may be trained along with each other for voice recognition. In an embodiment of the disclosure, the keyword adaptive detection model 310 may be a model pretrained to identify a word included in an input voice signal.

In an embodiment of the disclosure, the keyword adaptive detection model 310 may be trained by using a voice training data set. The threshold determining model 320 may be trained by using a text training data set corresponding to a voice training data set of the keyword adaptive detection model 310. In an example case in which the voice training data set includes voice data of "Samsung", the text training data set may include text-type data of "Samsung".

According to an embodiment, different probability values for the keyword of the keyword adaptive detection model 310 may be determined according to a voice training data set. In an example case in which the voice training data set includes a number of words which are at least partially identical to the keyword, the keyword adaptive detection model 310 may determine the probability value to be high. In an example case in which the enrolled or registered keyword is "Hi, Galaxy," the keyword adaptive detection model 310 may determine the probability value to be high when the voice training data set includes a word which is completely identical to the keyword. For example, the keyword adaptive detection model 310 may determine the probability value to be high when the voice training data set includes the phrase which is completely identical to the keyword "Hi, Galaxy" and/or a number of words which are partially identical to the keyword, e.g., "Hi" or "Galaxy." Similar to the above, in an example case in which the voice training data set includes few words which are at least partially identical to the keyword, the keyword adaptive detection model 310 may determine the probability value for the keyword to be low.

As the keyword adaptive detection model 310 determines different probability values according to training data and a keyword, different threshold values may be determined according to a keyword. In an example case in which the keyword adaptive detection model 310 shows a high probability value for a keyword, a threshold value corresponding to the keyword may need to be high as well. In an example case in which the keyword adaptive detection model 310 shows a low probability value for the keyword, a threshold value for the keyword may need to be low. In an example case in which the threshold value is not adaptively determined according to a keyword and remains constant, the keyword may be determined to be not included in the voice signal even when the keyword is included in the keyword, or the key word is determined to be included in the voice signal even when the keyword is not included in the voice signal.

Similar to the keyword adaptive detection model 310, different threshold values of the threshold determining model 320 may be determined according to a text training data set. The threshold determining model 320 mag include a language model. The language model may perform inference by dividing a text into a minimum unit (e.g., syllables or tokens). The language model may predict a subsequent unit based on a current unit. For example, the language model may predict which unit may follow. In addition, the language model may determine a probability of a subsequent unit. In an example case in which the current unit is "Hi" or "i," the language model may determine a probability of a subsequent unit being "Gal" or "Galaxy." In an embodiment of the disclosure, the threshold value may be determined by a confidence value for a keyword. The confidence value may be determined by using a probability determined when the keyword is input using the language model. For example, the threshold value may be determined by total sum, weighted sum, average, or multiplication of probabilities determined for each unit when the keyword is input.

In an embodiment of the disclosure, the keyword adaptive detection model 310 may include a language model. The keyword adaptive detection model 310 may include a language model which is identical to that of the threshold determining model 320; however, the disclosure is not limited thereto, and the keyword adaptive detection model 310 may include other different language models. For example, the language model of the keyword adaptive detection model 310 and the language model of the threshold determining model 320 may be trained by using the same data set.

In an embodiment of the disclosure, the keyword adaptive detection model 310 may infer a text included in the voice signal and determine a probability value for the inferred text by using the language model.

In an embodiment of the disclosure, the keyword adaptive detection model 310 may determine a probability value for the keyword by using the voice recognition model and the language model.

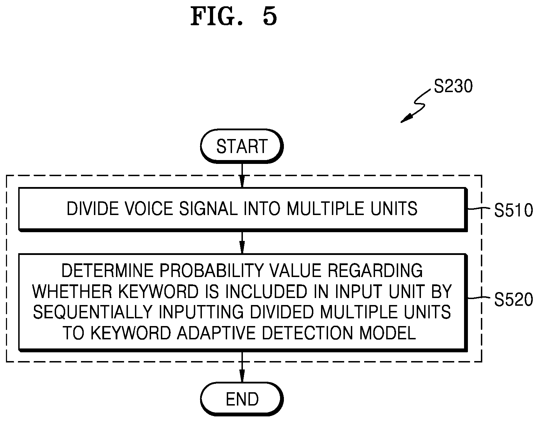

FIG. 5 is a flowchart illustrating an operation of obtaining a probability value for a keyword according to an embodiment of the disclosure.

Referring to FIG. 5, operation S230 may include operation S510 and operation S520. In an embodiment of the disclosure, operation S510 and operation S520 may be performed by the electronic device 100. For example, in the electronic device 100, the processor of the electronic device 100 may execute at least one instruction included in memory to perform each operation of operation S510 and operation S520.

In operation S510, the method may include dividing the voice signal into a plurality of units. For example, the electronic device 100 may divide the voice signal into a plurality of units. In an embodiment of the disclosure, the electronic device 100 may divide the voice signal into certain time interval units. For example, the electronic device 100 may divide the voice signal into units of 10 ms.

In operation S520, the method may include sequentially inputting the plurality of divided units to the keyword adaptive detection model and obtaining a probability value corresponding to the keyword. For example, the electronic device 100 may sequentially input the plurality of divided units to the keyword adaptive detection model and determine a probability value regarding whether the keyword is included in the input units.

In an embodiment of the disclosure, the electronic device 100 may extract features of the input units. The electronic device 100 may recognize contents (e.g., syllables, words, or sentences) corresponding to the extracted features.

In an embodiment of the disclosure, the electronic device 100 may determine a probability value regarding whether the keyword is included in input units, based on the recognized contents. The electronic device 100 may determine a probability value regarding whether the at least a part of the keyword is included in the recognized contents. In an example case in which the keyword is "Hi, Galaxy," the recognized contents may be "Hey, Hi, Galaxy, etc. which include a part of the keyword, i.e., "Hi," "Hi, Galaxy" which is identical to the keyword, and the keyword. The electronic device 100 may identify whether the recognized contents are a part of the keyword and determine a probability value by using the contents of the units which are sequentially input when the recognized contents are a part of the keyword. In an example case in which the recognized contents is "Hi" which is a part of the keyword, the electronic device 100 may determine a probability value by referring to the recognized contents according to a subsequent unit. In an embodiment of the disclosure, as the process of determining a probability value by the electronic device 100 is already described above, any redundant explanation may be omitted.

Operation S510 and operation S520 illustrated in FIG. 5 explain detailed operations of operation S230. The electronic device 100 may omit at least some of operations S510 to S520 or may further include an additional operation.

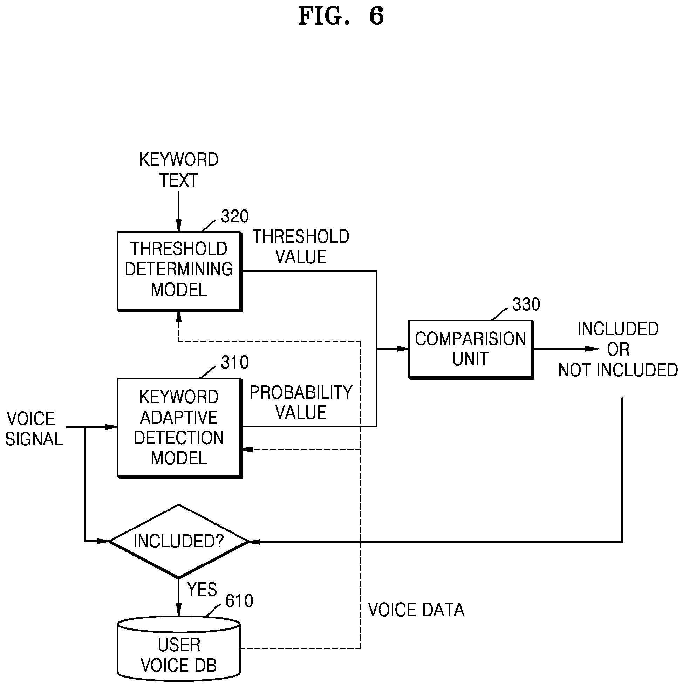

FIG. 6 is a diagram illustrating a process of training at least one model of an electronic device by using user voice data, according to an embodiment of the disclosure.

Referring to FIG. 6, the electronic device 100 may include a user voice data base (DB) 610. As the keyword adaptive detection model 310, the threshold determining model 320, and the comparison unit 330 are already described in detail in relation to FIGS. 3 and 4, any redundant description may be omitted.

The comparison unit 330 may determine whether the keyword is included in the obtained voice signal. The electronic device 100 may store the voice signal based on the determination that the keyword is included in the obtained voice signal. In an example case in which the keyword is not included in the obtained voice signal the electronic device 100 may discard the voice signal. For example, the electronic device 100 may not store the voice signal based on the determination that the keyword is not included in the obtained voice signal. The electronic device 100 may store the voice signal including the keyword (or voice signal by which performance of a particular function is accepted) in the user voice DB 610.

In an embodiment of the disclosure, the electronic device 100 may train the keyword adaptive detection model by using the stored voice signal. The electronic device 100 may update the keyword adaptive detection model 310 by using the voice data included in the user voice DB 610. The electronic device 100 may train (or re-train) the keyword adaptive detection model 310 by using the voice data included in the user voice DB 610. As the voice data included in the user voice DB 610 is the voice signal including the keyword, by training the keyword adaptive detection model 310 by using the voice data including the keyword, the accuracy for the keyword may be improved.

In an embodiment of the disclosure, the electronic device 100 may update the threshold determining model 320 or the threshold value by using the voice data included in the user voice DB 610. In an example case in which the keyword adaptive detection model 310 is trained by using the user voice DB 610, the output probability value may be changed (increased), and accordingly, the threshold value may also be changed. In an embodiment of the disclosure, the electronic device 100 may update the threshold value based on the probability value corresponding to the stored voice signal, based on the training of the keyword adaptive detection model 310. In an embodiment of the disclosure, the electronic device 100 may train the threshold determining model by using the stored voice signal, based on the training of the keyword adaptive detection model 310.

In an embodiment of the disclosure, the electronic device 100 may determine the threshold value based on the probability value for the voice signal included in the user voice DB 610. As the probability value for the voice signal included in the user voice DB 610 is higher than the threshold value before the update, the threshold value may be updated by using the probability value of the voice signal included in the user voice DB 610. For example, the threshold value may be determined to be an average of probability values of the voice signals included in the user voice DB 610.

In an embodiment of the disclosure, the electronic device 100 may train (or re-train) the threshold determining model 320 by using the voice data included in the user voice DB 610. The threshold determining model 320 may determine a threshold value different from the previous one, for the same keyword.

In an embodiment of the disclosure, the electronic device 100 may update the models and/or the threshold value by using the user voice DB 610. For example, the electronic device 100 may update the models and/or the threshold value when a certain number of voice data is stored in the user voice DB 610. However, the disclosure is not limited thereto, and as such, according to an embodiment, the electronic device 100 may update the models and/or threshold value according to a certain cycle (e.g., certain time periods, such as one week, one month, etc.)

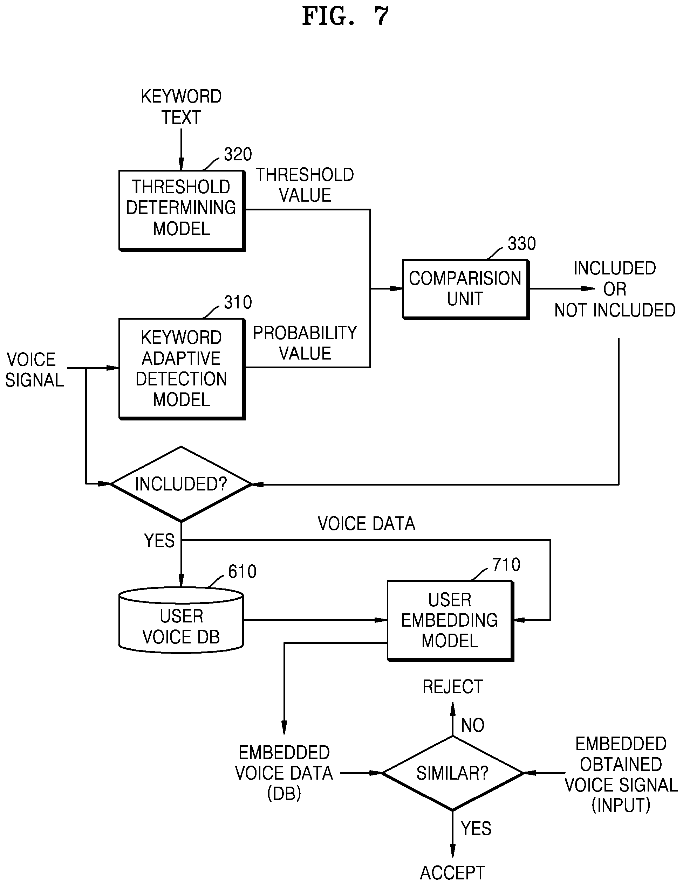

FIG. 7 is a diagram illustrating a process of determining whether a voice signal is a voice signal obtained by an utterance of a user, according to an embodiment of the disclosure.

Referring to FIG. 7, the electronic device 100 may include a user embedding model 710. As the keyword adaptive detection model 310, the threshold determining model 320, the comparison unit 330, and the user voice DB 610 are already explained in detail in relation to FIGS. 3 and 4, any redundant description will be omitted.

In an embodiment of the disclosure, the electronic device 100 may recognize a speaker of an obtained voice signal. The electronic device 100 may determine whether the speaker of the obtained voice signal is an allowed user and/or existing user. The electronic device 100 may perform a particular function based on a voice signal of the allowed user and/or existing user.

In an embodiment of the disclosure, the electronic device 100 may determine a similarity between the stored voice signal and the obtained voice signal. The electronic device 100 may determine a similarity between the voice data stored in the user voice DB 610 and the obtained voice signal. The electronic device 100 may determine a similarity by comparing the features of the stored voice signal and the obtained voice signal.

In an embodiment of the disclosure, the electronic device 100 may input the obtained voice signal and/or the voice data stored in the user voice DB 610 to the user embedding model 710. The user embedding model 710 may embed the input voice signal. The user embedding model 710 may extract features of the input voice signal. For example, the user embedding model 710 may determine a feature vector for the input voice signal. The feature vector may include feature information distinctive from other voice signals.

In an embodiment of the disclosure, the electronic device 100 may determine a similarity between the voice data stored in the user voice DB 610 and the obtained voice signal. The electronic device 100 may determine a similarity between embedded voice data and an embedded voice signal. The electronic device 100 may determine a similarity by using the feature vector determined by the user embedding model 710. For example, the electronic device 100 may determine the similarity by calculating a cosine similarity between feature vectors determined by the user embedding model 710.

In an embodiment of the disclosure, the electronic device 100 may determine whether the obtained voice signal corresponds to a registered user, based on the similarity. In an example case in which the similarity is greater than or equal to a certain value, the electronic device 100 may determine that the obtained voice signal corresponds to a registered user.

In an embodiment of the disclosure, a registered user may include a user who has previously used the voice recognition function. In an example case in which the electronic device 100 has not performed an early user registration separately, the electronic device 100 may store the voice signal of the user uttering the keyword in the user voice DB 610 and recognize the speaker by using the user voice DB 610. Accordingly, the electronic device 100 may recognize the user who has previously used the voice recognition function through a keyword. Even without an early obtainment of the voice data from the user, the electronic device 100 may identify the speaker by using the user voice data obtained during the voice recognition.

In an embodiment of the disclosure, the electronic device 100 may recognize the speaker based on the reliability value regarding the recognition of the speaker being greater than or equal to a certain value. For example, the electronic device 100 may perform the recognition of speaker when the number of voice stored in the user voice DB 610 is greater than or equal to a certain number. The recognition of speak may include identifying a speaker of the obtained voice signal by the electronic device 100. For example, the recognition of speaker may include determining whether the speaker corresponds to users stored in the electronic device 100 or determining to which user from among the stored users the speaker corresponds.

Although FIG. 7 illustrates that the electronic device 100 performs the speaker recognition after the voice recognition, according to an embodiment of the disclosure, the disclosure is not limited thereto, and the speaker recognition may be performed before the voice recognition. For example, the electronic device 100 may determine whether the obtained voice signal is similar to the voice data included in the user voice DB 610 through comparison and perform the voice recognition when the obtained voice signal is similar to the voice data included in the user voice DB 610.

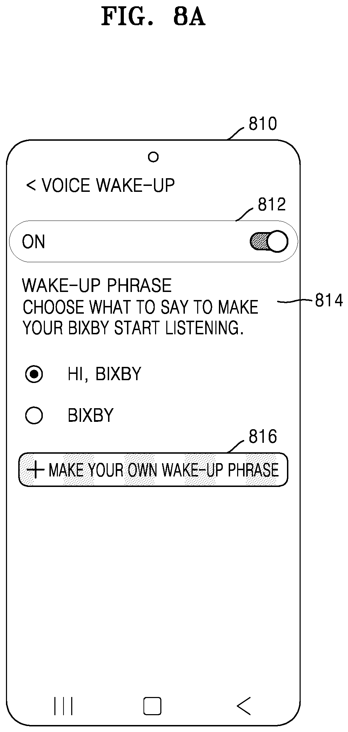

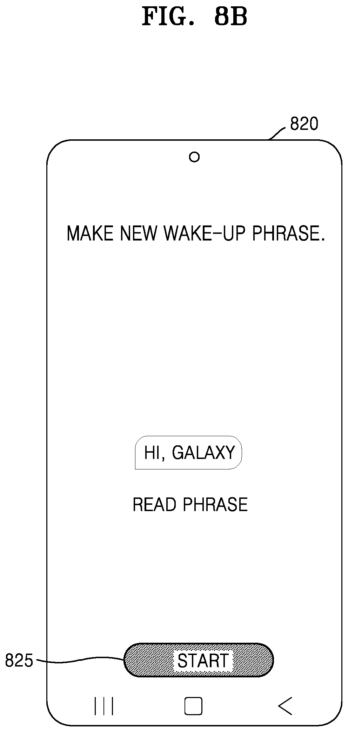

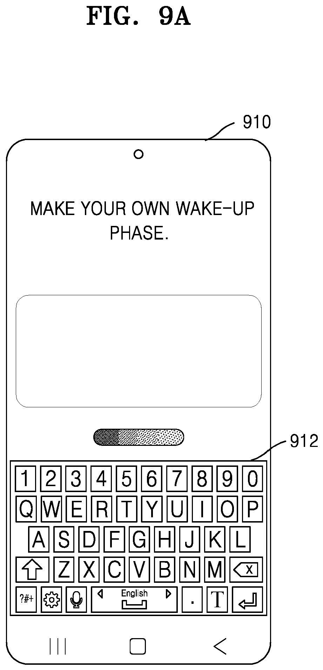

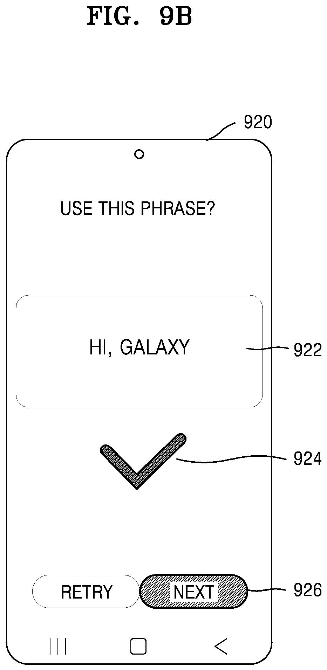

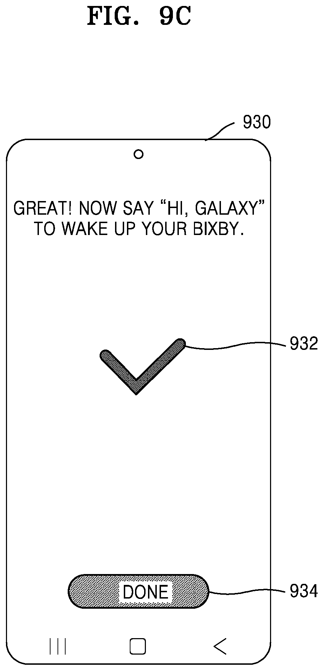

In an embodiment of the disclosure, with reference to FIGS. 8A, 8B, 9A, 9B and 9C, the keyword may be enrolled or registered in the electronic device 100. In an embodiment of the disclosure, the user interface (UI) described in relation to FIGS. 8A, 8B, 9A, 9B and 9C may be output through the display of the electronic device 100.

FIG. 8A is a diagrams illustrating a user interface for enrolling or registering a keyword, according to an embodiment of the disclosure.

In an embodiment of the disclosure, as illustrated in FIG. 8A, a first user interface 810 may include a UI component configured to control general setting for a voice call (or a voice assistance service, a function to determine whether a keyword is included in a voice signal, etc.). The first user interface 810 may include a UI component configured to control a use of the voice call. For example, the UI component configured to control a use of the voice call may include a toggle, a sliding bar, a button, and/or a tab.

The first user interface 810 may include a UI component 814 configured to set a keyword. The UI component 814 configured to set a keyword may be a user interface configured to select a keyword from among preset keywords or select a new keyword. For example, the UI component 814 configured to set a keyword may include a user interface showing preset keywords or a user interface configured to select one of UI components 816 relating to enrollment or registration of a new keyword.

FIG. 8B is a diagrams illustrating a user interface for enrolling or registering a keyword, according to an embodiment of the disclosure.

In an embodiment of the disclosure, as illustrated in FIG. 8B, a second user interface 820 may include a UI component configured to control operations relating to enrollment or registration of a new keyword. For example, in the electronic device 100, the second user interface 820 may be used in correspondence with the UI component 816 relating to enrollment or registration of a new keyword.

In an embodiment of the disclosure, the second user interface 820 may include a user interface configured to provide an explanation regarding a method of enrolling or registering a keyword. For example, the second user interface 820 may provide an example keyword of "Hi, Galaxy" and an explanation of "input the example keyword. The second user interface 820 may include a UI component 825 for proceeding to a next user interface. In an embodiment of the disclosure, a third user interface 910 of FIG. 9 may be used according to the UI component 825.

FIG. 9A is a diagram illustrating a user interface for enrolling or registering a keyword, according to an embodiment of the disclosure.

In an embodiment of the disclosure, as illustrated in FIG. 9A, a third user interface 910 may include a user interface configured to receive a keyword. For example, the third user interface 910 may provide an explanation that suggests an input of keyword.

The third user interface 910 may include a UI component 912 for a keyword input. For example, the UI component 912 may include a UI component configured to receive a letter through a touch input from a user. The electronic device 100 may obtain a keyword input through the UI component 912.

The third user interface 910 may include a UI component 914 displaying a keyword. The UI component 914 may display a keyword input through the UI component 912.

The third user interface 910 may include a UI component 916 displaying a process status. The UI component 916 may be a UI component showing whether a keyword is being input, whether a keyword has not been input, or whether a keyword input is complete.

In an embodiment of the disclosure, in a case in which the keyword is not input for a certain time period or information corresponding to completion of keyword input is input to the third user interface 910, a fourth user interface 920 may be further used.

FIG. 9B is a diagram illustrating a user interface for enrolling or registering a keyword, according to an embodiment of the disclosure.

In an embodiment of the disclosure, as illustrated in FIG. 9B, a fourth user interface 920 may include a user interface configured to confirm a keyword. The fourth user interface 920 may include a UI component 922 displaying a keyword. The UI component 922 may display a keyword input through the third user interface 910.

The fourth user interface 920 may include a UI component 924 displaying a progress status. The UI component 924 may be a UI component showing whether the input is complete. For example, the UI component 924 may be shown differently from the UI component 916 configured to show whether the keyword is being input or has not been input.

In an embodiment of the disclosure, the fourth user interface 920 may include a UI component 926 proceeding to a next user interface.

FIG. 9C is a diagram illustrating a user interface for enrolling or registering a keyword, according to an embodiment of the disclosure.

In an embodiment of the disclosure, as illustrated in FIG. 9C, a fifth user interface 930 may include a user interface output after the enrollment or registration of keyword is complete.

The fifth user interface 930 may include a UI component 932 displaying a progress status. The UI component 932 may be a UI component showing completion of input. For example, the UI component 932 and the UI component 924 may be shown in the same manner.

In an embodiment of the disclosure, the fifth user interface 930 may include a UI component 934 for terminating the enrollment or registration of keyword.

In an embodiment of the disclosure, the first user interface 810 to the fifth user interface 930 of FIGS. 8 and 9 are exemplary, and as such, the disclosure is not limited thereto. According to an embodiment, some of the first to fifth user interface 810 to 930 may be omitted or additional interface features may be provided. Moreover, some of the UI components included in the user interfaces may be omitted or additionally provided.

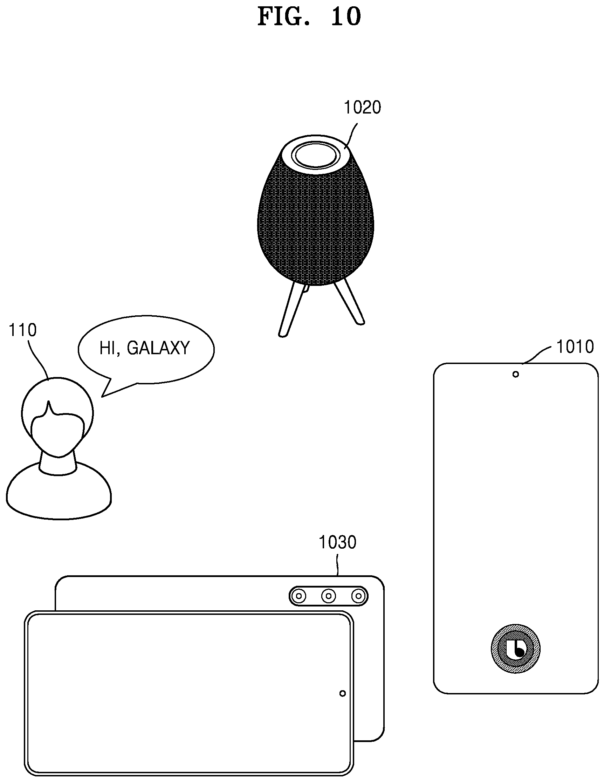

FIG. 10 is a diagram of a system in which voice recognition is performed by using an enrolled or a registered keyword, according to an embodiment of the disclosure.

In an embodiment of the disclosure, the electronic device 100 may be a smartphone including a voice recognition function, a tablet PC, PC, a smart TV, a mobile phone, a personal digital assistant (PDA), a laptop, a media player, a server, a microserver, a global positioning system (GPS) device, an electronic book terminal, a digital broadcasting terminal, a navigation, a kiosk, a MP3 player, a digital camera, a speaker, or other mobile or non-mobile computing devices; however, the disclosure is not limited thereto.

Referring to FIG. 10, the user 110 may perform a voice call in a system including a smartphone 1010, a speaker 1020, and a tablet personal computer (PC) 1030. The user 110 may call the electronic device 100 by uttering a keyword. In an example case in which the keywords of the smartphone 1010, the speaker 1020, and the tablet PC 1030 are the same, all of the smartphone 1010, the speaker 1020, and the tablet PC 1030 may response to an utterance of the keyword by the user 110. For example, all of the smartphone 1010, the speaker 1020, and the tablet PC 1030 may response to the keyword "Hi, Bixby" uttered by the user 110. In this case, each of the smartphone 1010, the speaker 1020, and the tablet PC 1030 may perform a particular function in response to the keyword. For example, each electronic device may provide at least one of an image, a text, or a sound.

In an embodiment of the disclosure, the user 110 may enroll or register different keywords in at least some of the smartphone 1010, the speaker 1020, and the tablet PC 1030. For example, the user 110 may set a keyword "Hi, Galaxy" in the smartphone 1010. The smartphone 1010 may response to the new keyword ("Hi, Galaxy) instead of the existing keyword ("Hi, Bixby") uttered by the user 110. Accordingly, when the user 110 calls a plurality of electronic devices having a voice recognition function, the electronic devices may be called individually from each other by differentiating the keywords.

In an embodiment of the disclosure, the electronic device 100 including the smartphone 1010 may enroll or register a keyword by using only a text input without a voice input by a user. This may improve convenience of the user 110.

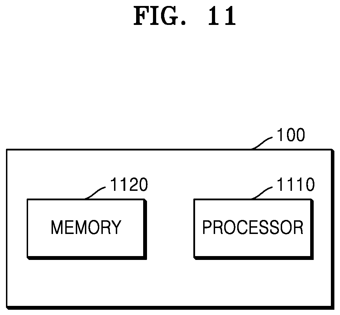

FIG. 11 is a block diagram of an electronic device for voice recognition according to an embodiment of the disclosure.

In an embodiment of the disclosure, the electronic device 100 may include a processor 1110 and memory 1120.

The processor 1110 may control all operations of the electronic device 100. For example, the processor 1110 may execute one or more instructions of a program stored in the memory 1120 to control all operations of the electronic device 100 for performance of the voice recognition.

In an embodiment of the disclosure, the processor 1110 may include a feature of controlling a series of processes such that the electronic device 100 operates according to embodiments of the disclosure. The processor 1110 may include at least one processor. The at least one processor included in the processor 1110 may include a circuitry device such as a system-on-chip (SoC), integrated circuit (IC), etc. The processor 1110 may be at least one processor including a central processing unit (CPU), a microprocessor, an application processor, a digital signal processor (DSP), a graphic processing unit, vision processing unit (VPU), an application specific integrated circuit (ASIC), a programmable logic device (PLD), a field programmable gate array (FPGA), a neural processing unit (UPU), a communication processor, and/or a processor dedicated for artificial intelligence having a hardware structure specialized for processing of an artificial intelligence model; however, the disclosure is not limited thereto.

Although it is not shown in FIG. 11, the electronic device 100 may further include additional components to perform the operations described in the embodiments of the disclosure above. For example, the electronic device 100 may further include a display, a camera, a microphone, a speaker, an input/output interface, etc.

In an example case in which the method according to an embodiment of the disclosure includes a plurality of operations, the plurality of operations may be performed by one processor or by a plurality of processors. In an example case in which a first operation, a second operation, and a third operations are performed by the method according to an embodiment of the disclosure, all of the first to third operations may be performed by a first processor, or the first and second operations may be performed by the first processor (for example, a generic-purpose processor), and the third operation may be performed by the second processor (for example, a processor for artificial intelligence). In this regard, the processor for artificial intelligence, which is an example of the second processor, may perform calculations for training/inference of an artificial intelligence model. However, the disclosure is not limited thereto.

At least one processor 1110 according to the disclosure may be implemented as a single-core processor or a multi-core processor.

In an example case in which the method according to an embodiment of the disclosure includes a plurality of operations, the plurality of operations may be performed by one core or by a plurality of cores included in at least one processor.

The processor 1110 according to an embodiment of the disclosure may include various processing circuitry and/or multi-processors. For example, the term "processor" as used herein and in the scope of claims may include various processing circuitry including one or more one processors, and at least one of the one or more processors may be individually and/or jointly perform various functions described herein in a distributed manner. As used herein, when a "processor," "at least one processor," and "one or more processors" are configured to perform various functions, this may include a case in which one processor performs various functions without any limitation. It may also be possible that processor(s) perform a function other than the functions described herein or that a single processor performs all the functions described herein. Additionally, at least one processor may include a combination of processors configured to perform listed/described various functions in a distributed manner. The at least one processor may execute a program command to achieve or perform various functions.

The memory 1120 may store instructions readable by the processor 1110, a data structure, and a program code. Operations performed by the processor 1110 may be implemented by executing the program instructions or codes stored in the memory 1120.

The memory 1120 may include at least one of a volatile memory or a non-volatile memory. For example, the memory 1120 may include at least one of flash memory type memory, hard disk type memory, multimedia card micro type memory, card type memory (for example, SD or XD memory, etc.), read-only memory (ROM), electrically erasable programmable ROM (EEPROM), PROM, magnetic memory, magnetic disk, optical disk, random access memory (RAM), or static RAM (SRAM).

The memory 1120 may store at least one instruction and/or program such that the electronic device 100 operates to perform the voice recognition. For example, the memory 1120 may store an instruction and/or program for implementing operations to perform the voice recognition. The processor 1110 may record data onto the memory 1120 or read data stored in the memory 1120. The processor 1110 may execute a program or at least one instruction stored in the memory 1120 to process data according to predefined operation rules or an artificial intelligence. The processor 1110 may perform operations described in the embodiments of the disclosure. Selectively, operations which are described to be performed by the electronic device 100 or components of the electronic device 100 in the embodiments of the disclosure may be performed by the processor 1110.

The memory 1120 may further store an instruction and/or program for implementing functions of an automatic voice recognition model (not shown).

In an embodiment of the disclosure, the processor 1110 may execute at least one instruction included in the memory 1120 to obtain an input image. The processor 1110 may execute the at least one instruction included in the memory 1120 to obtain a text input for a keyword. The processor 1110 may execute the at least one instruction included in the memory 1120 to obtain a voice signal corresponding to an utterance of a user. The processor 1110 may execute the at least one instruction included in the memory 1120 to determine a probability value regarding whether the keyword is included in the obtained voice signal by using the keyword adaptive detection model. The processor 1110 may execute the at least one instruction included in the memory 1120 to obtain a threshold value for the keyword by using the threshold determining model. The processor 1110 may execute the at least one instruction included in the memory 1120 to determine whether the keyword is included in the obtained voice signal based on the probability value and the threshold value.

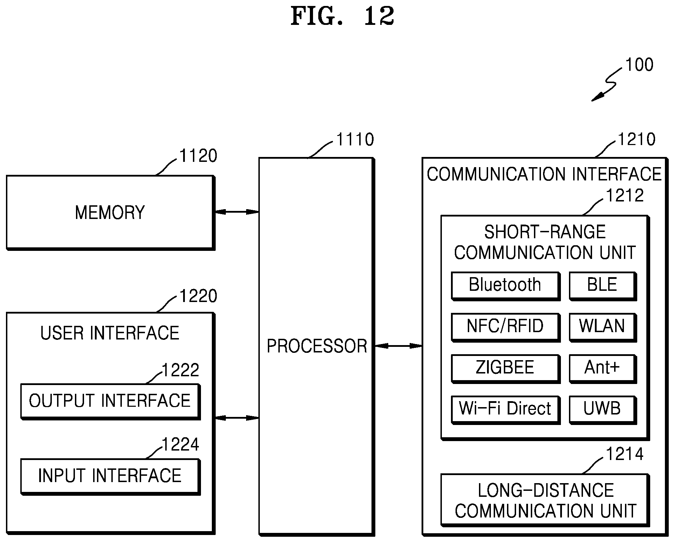

In an embodiment of the disclosure, the electronic device 100 may further include additional components in addition to the processor 1110 and the memory 1120. In an embodiment of the disclosure, components that may be included in the electronic device 100 are described in detail in relation to FIG. 12.

FIG. 12 is a block diagram of an electronic device for voice recognition according to an embodiment of the disclosure.

As illustrated in FIG. 12, the electronic device 100 according to an embodiment of the disclosure may further include a communication interface 1210 and/or a user interface 1220, in addition to the processor 1110 and the memory 1120.

The processor 1110 may control operations of the electronic device 100. The processor 1110 may execute programs stored in the memory 1120 to control the communication interface 1210, the user interface 1220, and/or the memory 1120.

The memory 1120 may store a program for processing and control by the processor 1110 and may store input/output data (for example, user voice data, etc.) The memory 1120 may store an artificial intelligence model. For example, the memory 1120 may store an automatic speech recognition model, a natural language understanding (NLU) model, and/or a text-to-speech (TTS) model, etc.

The communication interface 1210 may include at least one component configured to perform communication between the electronic device 100 and a server device (not shown) or between the electronic device 100 and a mobile terminal (not shown). For example, the communication interface 1210 may include a short-range communication unit 1212, a long-range communication unit 1214, etc.

The short-range communication unit 1212 may include a Bluetooth communication unit, a Bluetooth low energy (BLE) communication unit, a near-field communication (NFC) unit, a WLAN (Wi-Fi) communication unit, Zigbee communication unit, an infrared data association (IrDA) communication unit, a Wi-Fi direct (WFD) communication unit, an ultra wideband (UWB) communication unit, an Ant+ communication unit, etc.; however, the disclosure is not limited thereto.

The long-range communication unit 1214 may include internet, a computer network (e.g., LAN or WAN), or a mobile communication unit. The mobile communication unit may receive and transmit a wireless signal from and to at least one of a base station, an external terminal, or a server on a mobile communication network. In this regard, the wireless signal may include a voice call signal, a video call signal, or various forms of data according to transmission and reception of a text/multimedia message. The mobile communication unit may include a 3G module, a 4G module, a 5G module, a LTE module, a NB-IoT module, a LTE-M module, etc.; however, the disclosure is not limited thereto.

The user interface 1220 may include an output interface 1222 and an input interface 1224. The output interface 1222 may be for output of an audio signal or a video signal and may include a display and/or an audio output unit.

In an embodiment of the disclosure, the display and a touch pad may form a layer structure of a touch screen. When the display and the touch pad form a layer structure of the touch screen, the display may be used as the input interface 1224, in addition to the output interface 1222. The display may include at least one of a liquid crystal display, a thin film transistor-liquid crystal display, a light-emitting diode (LED), an organic LED, a flexible display, a three-dimensional (3D) display, or an electrophoretic display. Moreover, the electronic device 100 may include two or more displays according to an implementation form of the electronic device 100. For example, the electronic device 100 may include a front-side display and a rear-side display opposite to the front-side display.

In an embodiment of the disclosure, the display may display and output information processed in the electronic device 100. For example, the display may display an image stored in the memory 1120 of the electronic device 100. The display may output an interface for control of the electronic device 100, an interface for displaying a status of the electronic device 100, etc.

The audio output unit may output data received from the communication interface 1210 or stored in the memory 1120. However, the disclosure is not limited thereto, and as such, according to an embodiment, the audio output unit may output an audio signal relating to a function performed in the electronic device 100. The audio output unit may include a speaker, a buzzer, etc. For example, the speaker or the buzzer may output a signal relating to a function performed in the electronic device 100 (e.g., a call signal receiving sound, a message receiving sound, an alarm sound, etc.)

The input interface 1224 may receive an input from a user. The input interface 1224 may include at least one of a key pad, a dome switch, a touch pad (capacitive type, resistive type, infrared-sensitive type, surface ultrasonic conductive type, integral tension measurement type, piezo effect type, etc.), a jog wheel, a jog switch, or a microphone; however, the disclosure is not limited thereto.

The microphone may receive an audio signal. For example, the microphone may receive a voice signal corresponding to an utterance of a user. The microphone may receive an audio signal including a noise signal generated from a plurality of noise sources, in addition to a voice of a user. The microphone may transmit the obtained audio signal to the processor 1110 such that a voice recognition service is performed.

According to an embodiment of the disclosure, a method for voice recognition is provided. The method may include obtaining a text input including a keyword. The method may include obtaining a voice signal corresponding to an utterance of a user. The method may include obtaining a probability value for the keyword, by using a keyword adaptive detection model. The method may include obtaining a threshold value for the keyword by using a threshold determining model. The method may include determining whether the keyword is included in the obtained voice signal based on the probability value and the threshold value.

According to an embodiment, the keyword adaptive detection model may be trained by using a voice training data set.

The threshold determining model may be trained by using a text training data set corresponding to the voice training data set.

According to an embodiment of the disclosure, the keyword adaptive detection model may comprise an artificial intelligence model trained to output the probability value based on an input of the obtained voice signal. The threshold determining model may comprise an artificial intelligence model trained to output the threshold value based on an input of the text input.

According to an embodiment of the disclosure, the method may include storing the voice signal based on a determination that the keyword is included in the obtained voice signal. The method may include training the keyword adaptive detection model by using the stored voice signal.

According to an embodiment of the disclosure, the method may include updating the threshold value based on a probability value corresponding to the stored voice signal based on the training of the keyword adaptive detection model.

According to an embodiment of the disclosure, the method may include training the threshold determining model by using the stored voice signal based on the training of the keyword adaptive detection model.

According to an embodiment of the disclosure, the method may include determining a similarity between the stored voice signal and the obtained voice signal. The method may include determining, based on the similarity, whether the obtained voice signal corresponds to a registered user.

According to an embodiment of the disclosure, obtaining of the probability value may comprise dividing the obtained voice signal into a plurality of units comprising at least one syllable. Obtaining of the probability value may comprise obtaining the probability value with respect to whether the keyword is included in each of the divided units by sequentially inputting the plurality of units to the keyword adaptive detection model.

According to an embodiment of the disclosure, the threshold determining model may be configured to obtain the threshold value without voice information of the user.

According to an embodiment of the disclosure, the method may include providing at least one of an image, a text, or a sound based on the determination that the keyword is included in the obtained voice signal.

According to an embodiment of the disclosure, a computer-readable recording medium having recorded thereon a program is provided. The program may include a program for performing any one of the methods described above.

According to an embodiment of the disclosure, an electronic device for voice recognition is provided. The electronic device may include at least one processor including processing circuitry; and memory comprising one or more storage media storing at least one instruction that, when executed by the at least one processor individually or collectively, cause the electronic device to obtain a text input including a keyword. The at least one instruction executed by the at least one processor, individually or collectively, cause the electronic device to obtain a voice signal corresponding to an utterance of a user. The at least one instruction executed by the at least one processor, individually or collectively, cause the electronic device to obtain a probability value for the keyword by using a keyword adaptive detection model. The at least one instruction executed by the at least one processor, individually or collectively, cause the electronic device to obtain a threshold value for the keyword by using a threshold determining model. The at least one instruction executed by the at least one processor, individually or collectively, cause the electronic device to determine whether the keyword is included in the obtained voice signal based on the probability value and the threshold value.

According to an embodiment of the disclosure, the keyword adaptive detection model may be trained by using a voice training data set. The threshold determining model may be trained by using a text training data set corresponding to the voice training data set.

According to an embodiment of the disclosure, the keyword adaptive detection model may include an artificial intelligence model trained to output the probability value based on an input of the obtained voice signal. The threshold determining model may include an artificial intelligence model trained to output the threshold value based on an input of the text input.

According to an embodiment of the disclosure, the at least one instruction executed by the at least one processor individually or collectively, may cause the electronic device to store the voice signal based on a determination that the keyword is included in the obtained voice signal. The at least one instruction executed by the at least one processor individually or collectively, may cause the electronic device to train the keyword adaptive detection model by using the stored voice signal.

According to an embodiment of the disclosure, the at least one instruction executed by the at least one processor individually or collectively, may cause the electronic device to update the threshold value based on a probability value corresponding to the stored voice signal, based on the training of the keyword adaptive detection model.

According to an embodiment of the disclosure, the at least one instruction executed by the at least one processor individually or collectively, may cause the electronic device to train the threshold determining model by using the stored voice signal, based on the training of the keyword adaptive detection model.

According to an embodiment of the disclosure, the at least one instruction executed by the at least one processor individually or collectively, may cause the electronic device to determine a similarity between the stored voice signal and the obtained voice signal. The at least one instruction executed by the at least one processor individually or collectively, may cause the electronic device to determine, based on the similarity, whether the obtained voice signal corresponds to a registered user.

According to an embodiment of the disclosure, the at least one instruction executed by the at least one processor individually or collectively, may cause the electronic device to divide the obtained voice signal into a plurality of units comprising at least one syllable. The at least one instruction executed by the at least one processor individually or collectively, may cause the electronic device to obtain the probability value with respect to whether the keyword is included in each of the divided units by sequentially inputting the plurality of divided units to the keyword adaptive detection model,.

According to an embodiment of the disclosure, the threshold determining model may be configured to obtain the threshold value without voice information of the user.

According to an embodiment of the disclosure, the at least one instruction executed by the at least one processor individually or collectively, may cause the electronic device to provide at least one of an image, a text, or a sound based on the determination that the keyword is included in the obtained voice signal.

According to an embodiment of the disclosure, functions relating to artificial intelligence may be performed through the processor and the memory. The processor may include at least one processor. In example case in which the at least one processor may be a generic-purpose processor such as CPU, AP, or DSP, a graphic processor such as a GPU or VPU, or a processor dedicated for artificial intelligence such as NPU. The at least one processor may control to process input data according to an artificial intelligence model or predefined operation rules stored in the memory. In an example case in which the at least one processor is a processor dedicated for artificial intelligence, the processor dedicated for artificial intelligence may be designed to have a hardware structure specialized to process a particular artificial intelligence model.

The predefined operation rules or artificial intelligence models may be established through learning. In this regard, the establishment through learning may mean that a basic artificial intelligence model is trained by using a number of learning data by a learning algorithm to establish predefined operation rules or an artificial intelligence model set to perform desired features (or objects). Such learning may be conducted by a device itself in which the artificial intelligence according to the disclosure is operated or through a separate server and/or a system. Examples of the learning algorithm include supervised learning, unsupervised learning, semi-supervised learning, and reinforcement learning; however, the disclosure is not limited thereto.

The artificial intelligence model may include a plurality of neural network layers. The plurality of neural network layers may each have weight values and perform neural network calculations by using calculation results of previous layer and calculations among a plurality of weight values. The plurality of weight values of the plurality of neural network layers may be optimized by learning results of the artificial intelligence model. For example, the plurality of weight values may be updated to reduce or minimize a loss value or a cost value obtained in the artificial intelligence model during a learning process. The artificial neural network may include a deep neural network (DNN) and may be a convolutional neural network (CNN), a DNN, a recurrent neural network (RNN), a restricted Boltzmann machine (RBM), deep belief network (DBN), bidirectional recurrent deep neural network (BRDNN), or a deep Q-network; however, the disclosure is not limited thereto.

In the method for voice recognition of an electronic device according to the disclosure, as a method of recognizing a voice of a user to determine whether a keyword is included in a voice signal and interpreting an intention, a voice signal, which is an analog signal, may be received through an input/output device (e.g., a microphone), and a voice part may be converted into a computer-readable text by using an automatic speech recognition (ASR) model. By using a natural language understanding (NLU) model, the converted text may be interpreted to obtain an intention of an utterance of a user. The ASR model or the NLU model may be an artificial intelligence model. The artificial intelligence model may be processed by a processor which is dedicated for artificial intelligence and designed to have a hardware structure specialized for processing of an artificial intelligence model. The artificial intelligence model may be established through learning. In this regard, the establishment through learning may mean that a basic artificial intelligence model is trained by using a number of learning data by a learning algorithm to establish predefined operation rules or an artificial intelligence model set to perform desired features (or objects). The artificial intelligence model may include a plurality of neural network layers. The plurality of neural network layers may each have weight values and perform neural network calculations by using calculation results of previous layer and calculations among a plurality of weight values.

The linguistic understanding refers to a technology of recognizing human languages/letters and applying/processing the same, and may include natural language processing, machine translation, dialog system, question answering, speech recognition/synthesis, etc.

An embodiment of the disclosure may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium may typically include data of modified data signals, such as computer-readable instructions, a data structure, or a program model.

The computer-readable storage medium according to an embodiment of the disclosure may be provided in the form of a non-transitory storage medium. The non-transitory storage medium simply means that the medium is tangible and does not include signals (e.g., electromagnetic waves), and this term is not intended to distinguish semi-permanent storage of data in a storage medium from temporary storage of the same. For example, the non-transitory storage medium may include a buffer in which data is temporarily stored.

In addition, the method according to an embodiment may be included and provided in a computer program product. A computer program product may be traded between a seller and a buyer. The computer program may be distributed in the form of a machine-readable storage medium (e.g., compact disc read-only memory; CD-ROM), or distributed (e.g., downloaded or uploaded) online through an application store or directly between two user devices (e.g., smartphones). In the case of online distribution, at least some of the computer program products (e.g., a downloadable application, etc.) may be at least temporarily stored in a storage medium readable by devices, such as memory of a manufacturer server, an application store server, or a relay server or temporarily generated.

The above descriptions of the disclosure are provided merely as an example, and a person skilled in the art to which the disclosure pertains may understand that the disclosure can be easily modified into other specific forms without changing technical ideas or essential technical features of the disclosure. Therefore, it should be understood that the embodiments of the disclosure described above are provided as an example in every aspects, and thus do not pose a limitation on the disclosure. For example, each component described as a single type component may be implemented in a dispersed manner, and similarly to this, components described as being dispersed may be implemented in an integrated manner.

The scope of the disclosure is defined not by the detailed description of embodiments of the disclosure but by the appended claims, and may be construed as encompassing all modifications or adaptions derived from the meaning and scope of the claims and their equivalent concepts.

## Claims

1. A method for voice recognition, the method comprising:
obtaining a text input including a keyword (S210);
obtaining a voice signal corresponding to an utterance of a user (S220);
obtaining a probability value for the keyword, by using a keyword adaptive detection model (S230);
obtaining a threshold value for the keyword by using a threshold determining model (S240); and
determining whether the keyword is included in the obtained voice signal based on the probability value and the threshold value (S250).

2. The method of claim 1, wherein the keyword adaptive detection model is trained by using a voice training data set, and
the threshold determining model is trained by using a text training data set corresponding to the voice training data set.

3. The method of any one of claims 1 and 2, wherein the keyword adaptive detection model comprises an artificial intelligence model trained to output the probability value based on an input of the obtained voice signal and
the threshold determining model comprises an artificial intelligence model trained to output the threshold value based on an input of the text input.

4. The method of any one of claims 1 to 3, further comprising:
storing the voice signal based on a determination that the keyword is included in the obtained voice signal; and
training the keyword adaptive detection model by using the stored voice signal.

5. The method of claim 4, further comprising, based on the training of the keyword adaptive detection model, updating the threshold value based on a probability value corresponding to the stored voice signal.

6. The method of any one of claims 4 and 5, further comprising, based on the training of the keyword adaptive detection model, training the threshold determining model by using the stored voice signal.

7. The method of any one of claims 4 to 6, further comprising:
determining a similarity between the stored voice signal and the obtained voice signal; and
determining, based on the similarity, whether the obtained voice signal corresponds to a registered user.

8. The method of any one of claims 1 to 7, wherein the obtaining of the probability value (S230) comprises:
dividing the obtained voice signal into a plurality of units comprising at least one syllable; and
by sequentially inputting the plurality of units to the keyword adaptive detection model, obtaining the probability value with respect to whether the keyword is included in each of the divided units.

9. The method of any one of claims 1 to 8, wherein the threshold determining model is configured to obtain the threshold value without voice information of the user.

10. The method of any one of claims 1 to 9, further comprising providing at least one of an image, a text, or a sound based on the determination that the keyword is included in the obtained voice signal.

11. An electronic device for voice recognition, the electronic device comprising:
at least one processor including processing circuitry; and
memory comprising one or more storage media storing at least one instruction that, when executed by the at least one processor individually or collectively, cause the electronic device to:
obtain a text input including a keyword,
obtain a voice signal corresponding to an utterance of a user,
obtain a probability value for the keyword by using a keyword adaptive detection model,
obtain a threshold value for the keyword by using a threshold determining model, and
determine whether the keyword is included in the obtained voice signal based on the probability value and the threshold value.

12. The electronic device of claim 11, wherein the keyword adaptive detection model is trained by using a voice training data set, and
the threshold determining model is trained by using a text training data set corresponding to the voice training data set.

13. The electronic device of any one of claims 11 and 12, wherein the keyword adaptive detection model comprises an artificial intelligence model trained to output the probability value based on an input of the obtained voice signal and
the threshold determining model comprises an artificial intelligence model trained to output the threshold value based on an input of the text input.

14. The electronic device of any one of claims 11 to 13, wherein the at least one instruction executed by the at least one processor individually or collectively, cause the electronic device to:
store the voice signal based on a determination that the keyword is included in the obtained voice signal and
train the keyword adaptive detection model by using the stored voice signal.

15. A computer-readable recording medium having recorded thereon a program for performing the method of any one of claims 1 to 10, on a computer.
